# EUROPEAN PATENT APPLICATION

(11) **EP 4 371 961 A1**
(43) Date of publication of application: **22.05.2024**
(21) Application number: 23152888.6
(22) Date of filing: 23.01.2023
(51) Int. Cl.: C04B 28/14, C04B 24/42

(54) **FIRE-RESISTANT GYPSUM BOARDS AND METHODS OF MAKING THEM**

(30) Priority: 16.11.2022 US 202263384059 P
(71) Applicant: CertainTeed Gypsum, Inc., Malvern, PA 19355 (US)
(72) Inventor: AMATO, Dahlia, Malvern, 19355 (US); LESPIAT, Remi, Malvern, 19355 (US); REID, William, Malvern, 19355 (US)
(74) Representative: Saint-Gobain Recherche

(57) **Abstract**

The present invention relates generally to a method of producing a fire-resistant gypsum board comprising a gypsum core, the method comprising providing a calcium sulfate slurry comprising a silicone oil having a hydride content of no more than 0.01 equivalents of Si-H per equivalent of silicon in an amount of 0.1 to 1 wt% of the mass of the gypsum core; allowing the calcium sulfate slurry to set; and drying the set gypsum material to provide the gypsum core. The invention also relates to a fire-resistant gypsum board comprising a gypsum core that shrinks by less than 6% by volume when heated to 850 °C, wherein the gypsum core comprises a silicone oil having a hydride content of no more than 0.01 equivalents of Si-H per equivalent of silicon, present in an amount in the range of 0.1 to 1 wt% based on the mass of the gypsum core.

## Description

### BACKGROUND OF THE INVENTION

### 1. Field

The present invention relates generally to fire-resistant gypsum boards and methods of making the same.

### 2. Technical Background

Gypsum building products (e.g., known variously as wallboard, ceiling board, plasterboard and "drywall") are panels made of a gypsum core sandwiched between two layers of liner, often paper, on the outside surfaces of the gypsum core. They are widely used as construction materials due to their ease of fabrication, high mechanical strength, low thermal conductivity, resistance to spread of fire, and soundproofing properties. The quality of a gypsum board is strongly dependent on its gypsum core, which is fabricated by the hydration of stucco slurry (mainly containing calcium sulfate hemihydrate) into a set body of calcium sulfate dihydrate. To control the properties of gypsum boards, additives are often added to the stucco slurry during the board making process. For example, foaming agents, inorganic compounds, and other additives may be included in the slurry to modulate the density, strength, and/or fire resistance properties of the board.

To provide fire-resistant gypsum boards, it has been common to incorporate small amounts of polymethylhydrosiloxane (PMHS) to improve the fire resistance properties of the board. By including PMHS, the gypsum boards have reduced board shrinkage at elevated temperatures, which is indicative of improved structural integrity. However, PMHS has become a cost prohibitive additive due to a worldwide shortage. As such, there is a need in the art to find a substitute additive that provides similar fire resistance performance and find methods that better distribute the additive throughout the gypsum board.

### SUMMARY

In one aspect, the present invention relates to a method of producing a fire-resistant gypsum board comprising a gypsum core, the method comprising:
providing a calcium sulfate slurry comprising a silicone oil having a hydride content of no more than 0.01 equivalents of Si-H per equivalent of silicon in an amount of 0.1 to 1 wt% of the mass of the gypsum core (or of the mass stucco used to form the slurry);
allowing the calcium sulfate slurry to set to form a set gypsum material; and drying the set gypsum material to provide the gypsum core.

The silicone oil can be provided to the calcium sulfate slurry using, e.g., an aqueous emulsion of the silicone oil. As one alternative, if high-shear mixing is used to mix the calcium sulfate slurry, the silicone oil can be emulsified in the high-shear mixing.

In another aspect, the present invention relates to a fire-resistant gypsum board made by the methods as described herein.

In another aspect, the present invention relates to a fire-resistant gypsum board (e.g., made by the methods as described herein) comprising a gypsum core that shrinks by less than 6% by volume when heated to 850 °C, wherein the gypsum core comprises a silicone oil having a hydride content of no more than 0.01 equivalents of Si-H per equivalent of silicon, present in an amount in the range of 0.1 to 1 wt% based on the weight of the gypsum core.

### BRIEF DESCRIPTION OF FIGURES

The accompanying drawings are included to provide a further understanding of the methods of the invention, and are incorporated in and constitute a part of this specification. The drawings are not necessarily to scale, and sizes of various elements may be distorted for clarity. The drawings illustrate one or more embodiment(s) of the invention, and together with the description serve to explain the principles and operation of the invention.
FIG. 1 is an illustration of a fire-resistant board as described herein.
FIG. 2 is a graph of the diameter shrinkage of fire-resistant gypsum tested under ASTM C1795.
FIG. 3 is a graph of the diameter shrinkage of fire-resistant gypsum boards tested under ASTM C1795.
FIG. 4 is a graph of the diameter shrinkage of fire-resistant gypsum boards tested under ASTM C1795 and made by methods as described herein.
FIG. 5 is a graph of the diameter shrinkage of fire-resistant gypsum boards tested under ASTM C1795 and made by methods as described herein.

### DETAILED DESCRIPTION

The present inventors have developed a method of producing a fire-resistant board that does not require the use of polymethylhydrosiloxane (PMHS) but still has desired fire resistance properties.

As described above, PMHS is often used to provide fire resistance properties to gypsum boards. However, the use of PMHS in gypsum boards is becoming more expensive due to the short supply of the silicone oil. As such, there is a need in the art to find an acceptable substitute for PMHS that provides the same fire resistance properties to gypsum board.

Additionally, the present inventors have noted that PMHS has the propensity to migrate to the surface of gypsum boards during the setting and drying of the boards. This propensity for PMHS to migrate to the board surface can leave a relatively lower amount of PHMS at the center of the board, thus rendering the center of the board relatively less fire-resistant. To address this shortcoming of PHMS in fire-resistant boards, the present inventors have found methods to provide fire-resistant gypsum boards that improve thermal performance and better disperse silicone oil inside the gypsum board.

The present invention is concerned with fire-resistant gypsum boards comprising a gypsum core and methods for making them. As such, in one aspect, the present invention relates to a method for producing a fire-resistant gypsum board comprising a gypsum core, the method comprising providing a calcium sulfate slurry comprising a silicone oil having a hydride content of no more than 0.01 equivalents of Si-H per equivalent of silicon, in an amount of 0.1 to 1 wt% of the mass of the gypsum core; allowing the calcium sulfate slurry to set to form a set gypsum mater; and drying the set gypsum material to provide the gypsum core. And in another aspect, the present invention relates to a fire-resistant gypsum board (e.g., made by the methods as described herein) comprising a gypsum core that shrinks by less than 6% by volume when heated to 850 °C, wherein the gypsum core comprises a silicone oil having a hydride content of no more than 0.01 equivalents of Si-H per equivalent of silicon, present in an amount in the range of 0.1 to 1 wt% based on the weight of the gypsum core. The present inventors have determined that the use of polydimethylsiloxane is a good choice for the silicone oil in the methods and systems of the invention.

As would be understood by the skilled person, silicone oil can include a variety of different polysiloxanes. Such polysiloxanes can include both hydrogen and other functional groups to modify the polysiloxane backbone. For example, PMHS includes both Si-H and Si-CH₃ bonds. The silicone oil of the emulsion as described herein has a hydride content of no more than 0.01 equivalents of Si-H per equivalent of silicon. As such, the silicone oil as described here has a low amount of hydride content. In various embodiments, the silicone oil has a hydride content of no more than 0.005 equivalents, or 0.002 equivalents, or 0.001 equivalents of Si-H per equivalent of silicon. As would be understood by the skilled person, equivalents are calculated as molar equivalents.

A variety of silicones can be used in the methods and boards of the invention. In some embodiments, the silicone oil includes an alkyl-functional silicone. As used herein, an alkyl-functional silicone is a polysiloxane functionalized with alkyl groups. For example, in some embodiments, the silicone oil includes a methyl-functional silicone, an ethyl-functional silicone, a propyl-functional silicone, or a butyl-functional silicone. In some embodiments, the silicone oil is polydimethylsiloxane. However, in some embodiments, the silicone oil can be a copolymer of dimethylsiloxane, for example, with methylsiloxane or phenylsiloxane (in amounts such that the hydride content remains low). However, it is desirable in many embodiments that the molar content of dimethylsiloxane units in the silicon oil is at least 90%, e.g., at least 95% or at least 99%.

As above, the silicone oil can be provided to the calcium sulfate slurry using, e.g., an aqueous emulsion of the silicone oil. In some embodiments, the aqueous emulsion of silicone oil can be provided by emulsifying the silicone oil in water. The aqueous emulsion of silicone oil may be prepared by any emulsifying process as known in the art. In some embodiments, emulsifying is accomplished through mechanical processes. For example, in some embodiments, the aqueous emulsion of silicone oil is emulsified by mixing, shaking, and/or vortexing water with the silicone oil. The present inventors have found that the emulsifying process does not require any additional additives (e.g., emulsifiers) to provide an emulsified silicone. The emulsifying may be conducted for a time, at a mixer speed, and at a temperature, and such parameters are not particularly limited. It may be desirable to introduce the emulsion to the calcium sulfate slurry shortly after emulsification, before the emulsion has time to degrade significantly. The emulsion of silicone oil may in some embodiments have a silicone oil concentration of, e.g., 10-70% silicone oil.

Of course, other methods can be used. For example, the silicone oil can in some embodiments be provided to the calcium sulfate by mixing the silicone oil into the calcium sulfate slurry under conditions sufficient to form an emulsion. The mixing conditions of the calcium sulfate slurry itself may be sufficient to provide a desired emulsion of silicone oil, e.g., when high shear mixing is used. Thus, the high-shear mixer used to mix the calcium sulfate slurry itself can emulsify the silicone into the slurry. In other embodiments, the silicone can be emulsified into the water used to make the calcium sulfate slurry.

In some embodiments, the silicone oil has a d50 droplet size in the range of 5-100 microns. This can be, e.g., the d50 droplet size of a silicone oil emulsion that is added to a calcium sulfate slurry, and/or the d50 droplet size of the silicone oil in the calcium sulfate slurry itself.

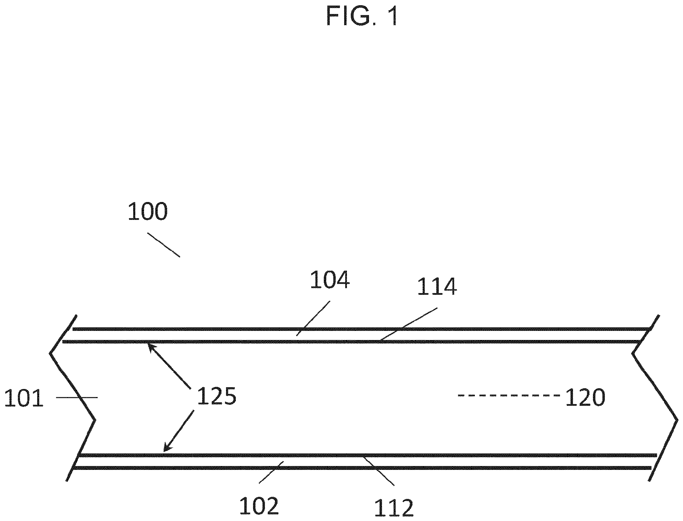

As described above, the present inventors surmise that the use of an emulsion helps to limit the migration of the silicone oil in the gypsum core, and thus the silicone oil concentration can remain more uniform throughout. Accordingly, in some embodiments of the methods and boards as described herein, the silicone oil concentration in the center of the gypsum core is at least 50% of the concentration within 10% of an outer edge of the gypsum core. For example, in various embodiments, the silicone oil concentration in the center of the gypsum core is at least 60%, or at least 65%, or at least 70%, or at least 75%, of the concentration within 10% of an outer edge of the gypsum core. In some embodiments, the silicone oil concentration in the center of the gypsum core is at least 50% of the concentration at the edge of the gypsum core. In various embodiments, the silicone oil concentration in the center of the gypsum core is at least 60 %, or at least 65%, or at least 70%, or at least 75% of the concentration at the edge of the gypsum core. "Center" and "outer edge" in this regard refers to sites measured along the thickness axis of the board. The "center" of the core is indicated by the dashed line 120 in FIG. 1, and the "outer edge" of the core is indicated by arrows 125 in FIG. 1, which is described in more detail below.

As described above, the method as described herein includes combining the providing a calcium sulfate slurry. In some embodiments, the calcium sulfate slurry is formed by combining stucco and water. As is known in the art, stucco can have a variety of compositions depending on the source and application at hand. As used herein, a "stucco" is a material having at least 75 wt% of calcium sulfate hemihydrate. It is typically provided by calcining gypsum to convert the dihydrate of gypsum to hemihydrate. Real-world samples of stucco typically include, together with the hemihydrate (e.g., present as α-calcium sulfate hemihydrate, β-calcium sulfate hemihydrate, or combinations thereof), one or more of calcium sulfate dihydrate, calcium sulfate anhydrate, and inert calcium sulfate.

As described above, the calcium sulfate slurry comprises stucco and water. As the person of ordinary skill in the art will appreciate, the water provides fluidity to the slurry for ease of handling, as well as provides the necessary water for hydration of the hemihydrate to gypsum. The person of ordinary skill in the art will select a desirable ratio of stucco to water. In various embodiments, the weight ratio of stucco to water in the slurry is no more than 3:1, e.g., no more than 5:2, or no more than 2:1, or no more than 7:4, or no more than 3:2. In some embodiments, the weight ratio of stucco to water is in the range of 3:1 to 1:2. In some embodiments, the weight ratio of stucco to water is in the range of 2:1 to 4:7, or 3:1 to 2:3, or 3:1 to 1:1, or 5:2 to 1:2, or 5:2 to 4:7, or 5:2 to 2:3, or 5:2 to 1:1, or 2:1 to 1:2, or 2:1 to 4:7, or 2:1 to 2:3, or 2:1 to 1:1, or 7:4 to 1:2, or 7:4 to 4:7, or 7:4 to 2:3, or 7:1 to 1:1, or 3:2 to 1:2, or 3:2 to 4:7, or 3:2 to 2:3, or 3:2 to 1:1. The stucco is desirably present in the calcium sulfate slurry to provide a gypsum core comprising mostly gypsum. For example, in various embodiments, the gypsum core comprise at least 75% gypsum, or at least 80 wt% gypsum, or at least 85 wt% gypsum.

As described above, the emulsified silicone oil is present in the calcium sulfate slurry in an amount of 0.1 to 1 wt% of the mass of the gypsum core. For example, in various embodiments, the emulsified silicone oil is present in the calcium sulfate slurry in an amount in the range of 0.1 to 0.75 wt%, or 0.1 to 0.5 wt%, or 0.1 to 0.25 wt% of the mass of the gypsum core. In some embodiments, the emulsified silicone oil is present in the calcium sulfate slurry in an amount in the range of 0.25 to 1 wt% of the mass of the gypsum core. For example, in various embodiments as described herein, the emulsified silicone oil is present in the calcium sulfate slurry in an amount in the range of 0.25 to 0.75 wt%, or 0.25 to 0.5 wt% of the mass of the gypsum core.

While not described in detail here, one or more additives can be provided in the calcium sulfate slurry. For example, in some embodiments, the additives are selected from one or more accelerators, fluidizers, retarders, dispersants, foaming agents, and/or glass fibers. In some embodiments, the additives are present in an amount of no more than 10 wt% of the mass of calcium sulfate in the slurry. In various embodiments, the additives are present in an amount of no more than 8 wt% or no more than 5 wt% of the mass of the gypsum core. The person of ordinary skill in the art will use an appropriate set of additives for a desired gypsum core material.

The method also includes allowing the calcium sulfate slurry to set to form a set gypsum material. As the person of ordinary skill in the art will appreciate, a calcium sulfate slurry as described herein will set over time to form a set gypsum material. Accelerators or retarders in the slurry can be used to adjust set time. The person of ordinary skill in the art can use conventional board manufacturing lines to form the set gypsum material between liners to make building boards.

As described above, the method includes drying the set gypsum material to provide the gypsum core. In some embodiments, drying occurs at a temperature in the range of 50-350 °C or 50-300 °C (i.e., measured in the environment above the board during drying, e.g., in a drying oven) to provide the gypsum core. For example, in various embodiments, drying occurs at a temperature in the range of 100-350 °C, or 100-325 °C , or 100-300 °C, or 150-350 °C, or 150-325 °C , or 150-300 °C, or 200-350 °C, or 200-325 °C , or 200-300 °C. Drying may be accomplished with an oven, wherein the oven temperature is in the range of 50-350 °C, or 50-325 °C, or 50-300°C, or 100-350 °C, or 100-325 °C , or 100-300 °C, or 150-350 °C, or 150-325 °C , or 150-300 °C, or 200-350 °C, or 200-325 °C , or 200-300 °C. During the drying step, the temperature of the gypsum core desirably does not exceed 125 °C, e.g., does not exceed 120 °C, 115 °C, 110 °C, or 105 °C. The person of ordinary skill in the art can use conventional drying methods in practicing the methods and boards of the invention.

As noted above, the use of silicone as described here, for example, providing the silicone as an emulsion, can provide gypsum boards with good fire resistance. One way to measure the fire resistance properties of the board is to measure the amount of shrinkage the board undergoes when exposed to high temperature. Such measurements are performed as described in ASTM C1795, which can be used to measure high-temperature shrinkage at 850 °C. Lower shrinkage is indicative of better fire resistance. In some embodiments, the gypsum core shrinks by less than 6% (e.g., less than 5%, or less than 4%) when heated to 850 °C as measured by ASTM C1795.

Another object of the present invention is a fire-resistant gypsum board made by the methods as described herein. Even if the board made by the methods described herein does not meet all the limitations of the boards as described in more detail below, the parameters described herein can be advantaged by many of the particular methods described above.

Another object of the present invention is a fire-resistant gypsum board (e.g., made by the methods as described herein) comprising a gypsum core that shrinks by less than 6% by volume when heated to 850 °C, wherein the gypsum core comprises as silicone oil having a hydride content of no more than 0.01 equivalents of Si-H per equivalent of silicon, present in an amount in the range of 0.1 to 1 wt% based on the weight of the gypsum core.

As described above, evaluation of the fire resistance of a gypsum board can be accomplished by measuring the shrinkage of the board at high temperatures. In some embodiments, the fire-resistant gypsum board as described herein shrinks by less than 5% by volume (e.g., less than 4% by volume) when heated to 850 °C.

The silicone oil can be as described in any embodiment described above with respect to the method of producing gypsum boards of the invention. In various embodiments as described herein, the silicone oil is an alkyl-functional is polydimethylsiloxane.

In some embodiments, the gypsum core of the fire-resistant gypsum board as described herein comprises a silicone oil in an amount in the range of 0.1 to 0.75 wt% based on the mass of the gypsum core. For example, in various embodiments, the gypsum core comprises a silicone oil in an amount in the range of 0.1 to 0.5 wt%, or 0.1 to 0.25 wt%, based on the mass of the gypsum core. In some embodiments, the gypsum core of the fire-resistant gypsum board as described herein comprises a silicone oil in an amount in the range of 0.25 to 1 wt%, based on the mass of the gypsum core. For example, in various embodiments, the gypsum core comprises a silicone oil in an amount in the range of 0.25 to 0.75 wt%, or 0.25 to 0.5 wt%, based on the mass of the gypsum core.

As the person of ordinary skill in the art will appreciate, gypsum boards are typically provided with liners at opposing major surfaces thereof. In some embodiments, the gypsum core of the fire-resistant gypsum board is disposed between a first liner at a first major surface of the gypsum board and a second liner at a second, opposing major surface of the board. In some embodiments, the gypsum core of the fire resistant gypsum is disposed between a first paper liner at a first major surface of the gypsum board and a second paper liner at a second, opposing major surface of the board. An example of such a gypsum board is shown in a cross-sectional schematic view in FIG. 1. Here, fire-resistant gypsum board (100) including a gypsum core (101) and a first liner (102) at a first major surface (112) of the gypsum board; a second liner (104) at a second, opposing major surface (114) of the gypsum board. The liners can be formed, for example, from paper (which itself can be coated with a variety of substances, e.g., wax or silicone) or fiberglass. Of course, other liner materials are possible.

### EXAMPLES

The Examples that follow are illustrative of specific embodiments of the methods and products of the invention, and various uses thereof. They are set forth for explanatory purposes only, and are not to be taken as limiting the scope of the invention.

### Example 1. Impact of PDMS Concentration on High Temperature Shrinkage without Emulsification

Gypsum boards were prepared with different polydimethylsiloxane (PDMS) concentrations. To prepare the boards, a gypsum slurry including 550 g of stucco, 284.08 g of water, 2 g (5.79 Ibs/msf, 0.4 wt% based on the weight of stucco) of an accelerator, 5 g (14.48 Ibs/msf, 1 wt% based on the weight of stucco) of a plaster retardant, and 1 wt% of a surfactant, based on the weight of stucco, was prepared. To the slurry, PDMS was added in a variety of amounts. The PDMS was not emulsified prior to addition to the slurry. For comparison, a gypsum slurry without any silicone oil were prepared.

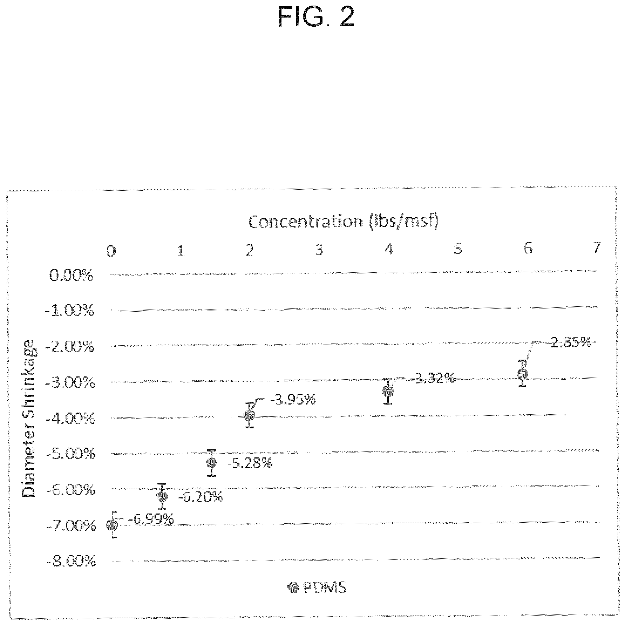

Board samples were then formed by allowing the gypsum slurry to set and then dry. Each board was 5/8 inches thick. The samples were made and tested by ASTM C1795 high temperature shrinkage at 850 °C to evaluate the fire-resistant properties of the board. Table 1 reports the board formulations and the results of the high temperature shrinkage test. FIG. 2 also shows the results of the ASTM C1795 high temperature shrinkage at 850 °C, including error bars. The error bar of ASTM C1795 high temperature shrinkage at 850 °C in these measurements is around 0.35%.

**Table 1.**

| Board No. | Concentration of PDMS | | Board weight | Emulsification? | ASTM shrinkage at 850°C |
|---|---|---|---|---|---|
| | wt% to stucco | Ibs/msf | Ibs/msf | Yes/No | % diameter shrinkage |
| 1 | 0% | 0 | 1814 | No | -6.99% |
| 2 | 0.035% | 0.72 | 1762 | No | -6.20% |
| 3 | 0.070% | 1.43 | 1763 | No | -5.28% |
| 4 | 0.141% | 1.98 | 1780 | No | -3.95% |
| 5 | 0.282% | 3.97 | 1833 | No | -3.32% |
| 6 | 0.423% | 5.9 | 1811 | No | -2.85% |

From the results of Table 1 and FIG. 2, it can be seen that the inclusion of PDMS reduces the diameter shrinkage of the board, correlating to improved fire-resistant performance. Additionally, it can be seen that increasing the concentration of PDMS decreases the shrinkage and continues to decrease after 2 Ibs/msf.

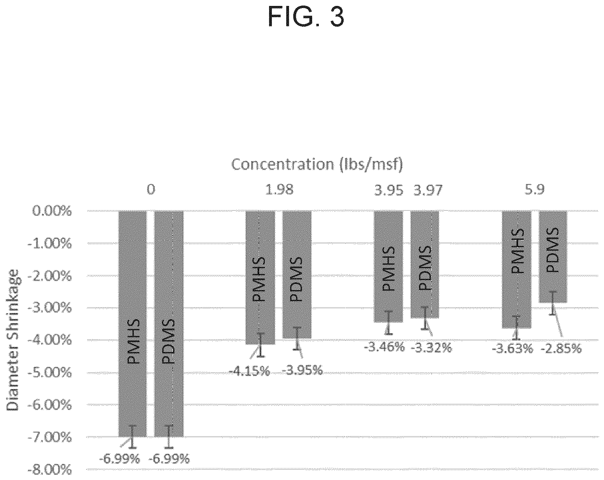

For further comparison, board samples were prepared as described above but with polymethylhydrosiloxane (PMHS) at 1.98 Ibs/msf, 3.97 Ibs/msf, and 5.9 Ibs/msf. FIG. 3 shows the results of the ASTM C1795 high temperature shrinkage at 850 °C (including error bars) for the PMHS boards and the PDMS boards. From FIG. 3, it can be seen that PDMS and PMHS have a similar action on the shrinkage of plasterboards at the same concentration. However, the impact of increasing the concentration of PMHS seems to reach a plateau after 2 Ibs/msf.

### Example 2. Impact of Emulsification of PDMS on High Temperature Shrinkage

Gypsum boards were prepared as described in Example 1, however the PDMS was first emulsified prior to addition to the gypsum slurry. To emulsify the silicone oil, it is mixed in a VMI Rayneri equipped with an emulsion blade (from VMI Linxis group: B00181347). The emulsion blade uses a combination of a stator, that is 30 mm high with 29 slots, and a rotor, that includes 4 blades. Emulsification is done by mixing for 2 minutes at 2750 rpm with water at room temperature with the silicone oil before the rest of the liquid part of the formulation is added, followed by the dry part.

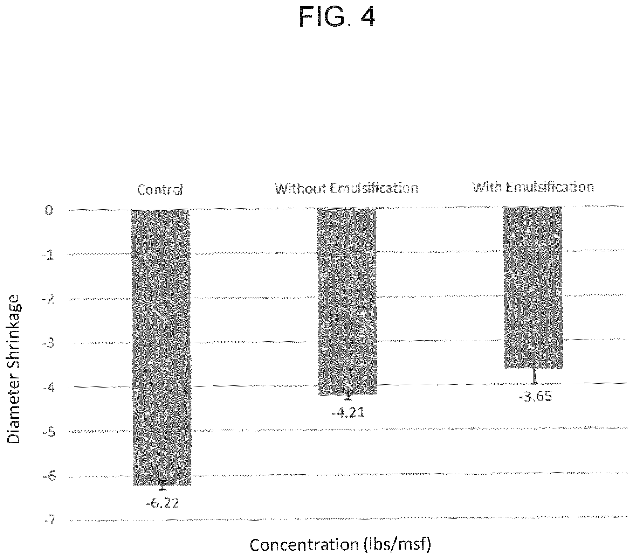

The boards were then tested by ASTM C1795 high temperature shrinkage at 850 °C to evaluate the fire-resistant properties of the board. Table 2 reports the board formulation and the results of the high temperature shrinkage test. FIG. 4 also shows the results of the ASTM C1795 high temperature shrinkage at 850 °C, including error bars. The error bar of ASTM C1795 high temperature shrinkage at 850 °C in these measurements is around 0.35%.

Table 2.

| Board No. | Concentration of PDMS | | Board weight | Emulsification? | ASTM at 850 °C shrinkage |
|---|---|---|---|---|---|
| | wt% to stucco | Ibs/msf | Ibs/msf | Yes/No | % diameter shrinkage |
| 7 | 0% | 0 | 1793 | No | -6.22 |
| 8 | 0.25% | 3.55 | 1798 | No | -4.21 |
| 9 | 0.25% | 3.55 | 1784 | Yes | -3.65 |

From the results of Table 2 and FIG. 4, using emulsified PDMS further decreases the diameter shrinkage of the board sample from -4.21% (Board No. 8) to -3.65% (Board No. 9).

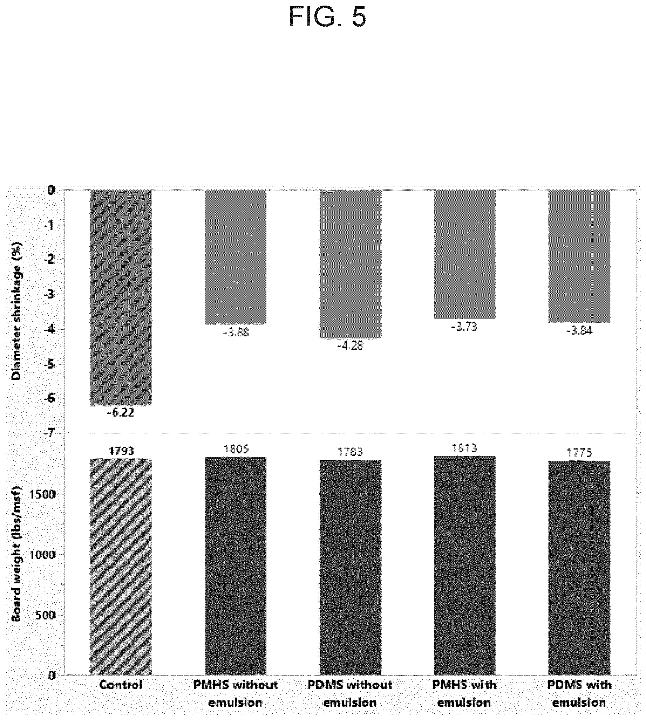

Board samples were prepared as described above but with polymethylhydrosiloxane (PMHS) at 0.25 wt% to stucco. FIG. 5 shows the results of the ASTM C1795 high temperature shrinkage at 850 °C (including error bars) for the PMHS boards and the PDMS boards. From FIG. 5, it can be seen that emulsification of PDMS provided improved shrinkage performance that was not observed with the PMHS boards.

Various aspects and embodiments of the invention are described by the following enumerated embodiments, which may be combined in any number and in any combination that is not technically or logically inconsistent.
Embodiment 1. A method of producing a fire-resistant gypsum board comprising a gypsum core, the method comprising:
   providing a calcium sulfate slurry comprising a silicone oil having a hydride content of no more than 0.01 equivalents of Si-H per equivalent of silicon, in an amount of 0.1 to 1 wt% of the mass stucco used to form the slurry;
   allowing the calcium sulfate slurry to set to form a set gypsum material; and drying the set gypsum material to provide the gypsum core.
Embodiment 2. The method of Embodiment 1, wherein the silicone oil is an alkyl-functional silicone.
Embodiment 3. The method of Embodiment 1 or Embodiment 2, wherein the silicone oil is polydimethylsiloxane.
Embodiment 4. The method of any of Embodiments 1-3, wherein the silicone oil is provided to the calcium sulfate slurry in the form of an aqueous emulsion.
Embodiment 5. The method of any of Embodiments 1-3, wherein the silicone oil is provided to the calcium sulfate by mixing the silicone oil into the calcium sulfate slurry under conditions sufficient to form an emulsion.
Embodiment 6. The method of Embodiment 4, wherein the aqueous emulsion of silicone oil has a d50 droplet size in the range of 5-100 microns.
Embodiment 7. The method of any of Embodiments 1-6, wherein the d50 droplet size of the silicone oil in the calcium sulfate slurry is in the range of 5-100 microns.
Embodiment 8. The method of any of Embodiments 1-7, wherein the silicone oil concentration in the center of the gypsum core is at least 50% of the concentration within 10% of an outer edge of the gypsum core.
Embodiment 9. The method of any of Embodiments 1-7, wherein the silicone oil concentration in the center of the gypsum core is at least 60%, e.g., at least 65%, or at least 70%, or at least 75%, of the concentration within 10% of an outer edge of the gypsum core.
Embodiment 10. The method of any of Embodiments 1-7, wherein the silicone oil concentration in the center of the gypsum core is at least 50% of the concentration at the edge of the gypsum core.
Embodiment 11. The method of any of Embodiments 1-7, wherein the silicone oil concentration in the center of the gypsum core is at least 60 %, e.g., at least 65%, or at least 70%, or at least 75% of the concentration at the edge of the gypsum core.
Embodiment 12. The method of any of Embodiments 1-11, wherein the calcium sulfate slurry is formed by combining stucco and water in weight ratio of no more than 3:1.
Embodiment 13. The method of any of Embodiments 1-11, wherein the calcium sulfate slurry is formed by combining stucco and water in a weight ratio in the range of 3:1 to 1:2.
Embodiment 14. The method of any of Embodiments 1-13, wherein the gypsum core comprises at least 75 wt% gypsum, e.g., at least 80 wt% gypsum, or at least 85 wt% gypsum.
Embodiment 15. The method of any of Embodiments 1-14, wherein the emulsified silicone oil is present in the calcium sulfate slurry in an amount in the range of 0.1 to 0.75 wt% (e.g., in the range of 0.1 to 0.5 wt%, or 0.1 to 0.25 wt%) of the mass of the gypsum core.
Embodiment 16. The method of any of Embodiments 1-14, wherein the emulsified silicone oil is present in the calcium sulfate slurry in an amount in the range of 0.25 to 1 wt% (e.g., in the range of 0.25 to 0.75 wt%, or 0.25 to 0.5 wt%) of the mass of the gypsum core.
Embodiment 17. The method of any of Embodiments 1-16, wherein one or more additives are provided in the calcium sulfate slurry.
Embodiment 18. The method of Embodiment 17, wherein the additives are selected from one or more accelerators, fluidizers, retarders, dispersants, foaming agents, and/or glass fibers.
Embodiment 19. The method of Embodiment 17 or Embodiment 18, wherein the additives are present in an amount of no more than 10 wt% (e.g., no more than 8 wt%, or no more than 5 wt%) of the mass of the gypsum core.
Embodiment 20. The method of any of Embodiments 1-19, wherein the drying occurs at a temperature in the range of 50-350 °C to provide the gypsum core.
Embodiment 21. The method of any of Embodiments 1-20, wherein the gypsum core shrinks by less than 6% (e.g., less than 5%, or less than 4%) when heated to 850 °C as measured by ASTM C1795.
Embodiment 22. A fire-resistant gypsum board made by the method of any of Embodiments 1-21.
Embodiment 23. A fire-resistant gypsum board (e.g., made by the method of any of Embodiments 1-21) comprising a gypsum core that shrinks by less than 6% by volume when heated to 850 °C, wherein the gypsum core comprises a silicone oil having a hydride content of no more than 0.01 equivalents of Si-H per equivalent of silicon, present in an amount in the range of 0.1 to 1 wt% based on the mass of the gypsum core.
Embodiment 24. The fire-resistant gypsum board of Embodiment 23, wherein the gypsum core shrinks by less than 5% by volume (e.g., less than 4% by volume) when heated to 850 °C.
Embodiment 25. The fire-resistant gypsum board of Embodiment 23 or Embodiment 24, where the gypsum core comprises a silicone oil in an amount in the range of 0.1 to 0.75 wt% (e.g., in the range of 0.1 to 0.5 wt%, or 0.1 to 0.25 wt%) based on the weight of the gypsum core.
Embodiment 26. The fire-resistant gypsum board of any of Embodiments 23-25, wherein the gypsum core comprises a silicone oil in an amount in the range of 0.25 to 1 wt% (e.g., in the range of 0.25 to 0.75 wt%, or 0.25 to 0.5 wt%) based on the weight of the gypsum core.
Embodiment 27. The fire-resistant gypsum board of any of Embodiments 23-26, wherein the silicone oil is polydimethylsiloxane.
Embodiment 28. The fire-resistant gypsum board of any of Embodiments 23-27, wherein the silicone oil concentration in the center of the gypsum core is at least 50% of the concentration within 10% of an outer edge of the gypsum core.
Embodiment 29. The fire-resistant gypsum board of any of Embodiments 23-27, wherein the silicone oil concentration in the center of the gypsum core is at least 60%, e.g., at least 65%, or at least 70%, or at least 75%, of the concentration within 10% of an outer edge of the gypsum core.
Embodiment 30. The fire-resistant gypsum board of any of Embodiments 23-27, wherein the silicone oil concentration in the center of the gypsum core is at least 50% of the concentration at the edge of the gypsum core.
Embodiment 31. The fire-resistant gypsum board of any of Embodiments 23-27, wherein the silicone oil concentration in the center of the gypsum core is at least 60 %, e.g., at least 65%, or at least 70%, or at least 75% of the concentration at the edge of the gypsum core.
Embodiment 32. The fire-resistant gypsum board of any of Embodiments 23-31, wherein the gypsum core is disposed between a first liner at a first major surface of the gypsum board and a second liner at a second, opposing major surface of the board.
Embodiment 33. The fire-resistant gypsum board of Embodiment 32, wherein the liners are paper liners.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice. Thus, before the disclosed processes and devices are described, it is to be understood that the aspects described herein are not limited to specific embodiments, apparatuses, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the invention (especially in the context of the following claims) are to be construed to cover both the singular and the plural, unless otherwise indicated herein or clearly contradicted by context. Recitation of ranges of values herein is merely intended to serve as a shorthand method of referring individually to each separate value falling within the range. Unless otherwise indicated herein, each individual value is incorporated into the specification as if it were individually recited herein. It will be further understood that the endpoints of each of the ranges are significant both in relation to the other endpoint, and independently of the other endpoint.

All methods described herein can be performed in any suitable order of steps unless otherwise indicated herein or otherwise clearly contradicted by context. The use of any and all examples, or exemplary language (e.g., "such as") provided herein is intended merely to better illuminate the invention and does not pose a limitation on the scope of the invention otherwise claimed. No language in the specification should be construed as indicating any non-claimed element essential to the practice of the invention.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

Unless indicated to the contrary, the numerical parameters set forth in the specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Groupings of alternative elements or embodiments of the invention disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of this invention are described herein, including the best mode known to the inventors for carrying out the invention. Of course, variations on these described embodiments will become apparent to those of ordinary skill in the art upon reading the foregoing description. The inventor expects skilled artisans to employ such variations as appropriate, and the inventors intend for the invention to be practiced otherwise than specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Furthermore, it is to be understood that the embodiments of the invention disclosed herein are illustrative of the principles of the present invention. Other modifications that may be employed are within the scope of the invention. Thus, by way of example, but not of limitation, alternative configurations of the present invention may be utilized in accordance with the teachings herein. Accordingly, the present invention is not limited to that precisely as shown and described.

## Claims

1. A method of producing a fire-resistant gypsum board comprising a gypsum core, the method comprising:
providing a calcium sulfate slurry comprising a silicone oil having a hydride content of no more than 0.01 equivalents of Si-H per equivalent of silicon, in an amount of 0.1 to 1 wt% of the mass stucco used to form the slurry;
allowing the calcium sulfate slurry to set to form a set gypsum material; and drying the set gypsum material to provide the gypsum core.

2. The method of claim 1, wherein the silicone oil is an alkyl-functional silicone.

3. The method of claim 1 or claim 2, wherein the silicone oil is polydimethylsiloxane.

4. The method of any of claims 1-3, wherein the silicone oil is provided to the calcium sulfate slurry in the form of an aqueous emulsion.

5. The method of any of claims 1-3, wherein the silicone oil is provided to the calcium sulfate by mixing the silicone oil into the calcium sulfate slurry under conditions sufficient to form an emulsion.

6. The method of any of claims 1-5, wherein the d50 droplet size of the silicone oil in the calcium sulfate slurry is in the range of 5-100 microns.

7. The method of any of claims 1-6, wherein the silicone oil concentration in the center of the gypsum core is at least 60% of the concentration within 10% of an outer edge of the gypsum core.

8. The method of any of claims 1-7, wherein the calcium sulfate slurry is formed by combining stucco and water in a weight ratio in the range of 3:1 to 1:2.

9. The method of any of claims 1-8, wherein the silicone oil is present in the calcium sulfate slurry in an amount in the range of 0.1 to 0.75 wt% of the mass of the gypsum core.

10. The method of any of claims 1-9, wherein the gypsum core shrinks by less than 5% when heated to 850 °C as measured by ASTM C1795.

11. A fire-resistant gypsum board, preferably made by the method of any of claims 1-10, comprising a gypsum core that shrinks by less than 6% by volume when heated to 850 °C, wherein the gypsum core comprises a silicone oil having a hydride content of no more than 0.01 equivalents of Si-H per equivalent of silicon, present in an amount in the range of 0.1 to 1 wt% based on the mass of the gypsum core.

12. The fire-resistant gypsum board of claim 11, wherein the gypsum core shrinks by less than 5% by volume when heated to 850 °C.

13. The fire-resistant gypsum board of claim 11 or claim 12, where the gypsum core comprises the silicone oil in an amount in the range of 0.1 to 0.75 wt% based on the weight of the gypsum core.

14. The fire-resistant gypsum board of any of claims 11-13, wherein the silicone oil is polydimethylsiloxane.

15. The fire-resistant gypsum board of any of claims 11-14, wherein the gypsum core is disposed between a first paper liner at a first major surface of the gypsum board and a second paper liner at a second, opposing major surface of the board.
